Europäisches Patentamt

European Patent Office

Office européen des brevets

(19)

(11) Numéro de publication: **0 060 750**
**A1**

(12) **DEMANDE DE BREVET EUROPEEN**

(21) Numéro de dépôt: **82400334.7**

(22) Date de dépôt: **26.02.82**

(51) Int. Cl.³: **B 62 J 1/08**

(30) Priorité: **13.03.81 FR 8105074**

(43) Date de publication de la demande: **22.09.82**
**Bulletin 82/38**

(84) Etats contractants désignés: **BE CH DE GB IT LI NL SE**

(71) Demandeur: **ATELIERS DE LA MOTOBECANE, 16, rue Lesault, F-93502 Pantin (FR)**

(72) Inventeur: **Beaufort, Philippe, 2, rue d'Artois, F-02100 Homblieres (FR)**

(74) Mandataire: **Maureau, Bernard et al, Cabinet Germain & Maureau Conseils en Brevets d'Invention 64, rue d'Amsterdam, F-75009 Paris (FR)**

(54) Blocage de tige de selle pour cycles, cyclomoteurs et similaires.

(57) Le tube de selle (1) présente deux saignées horizontales (2) librement traversées par les deux ailes (5) d'une pièce (4) en forme de U couché dont l'âme est traversée par la tige d'une vis (7) qui se visse dans un écrou (3) solidaire du tube de selle (1) et qui par sa tête prend appui contre l'âme de cette pièce et la repousse jusqu'à contact des bords extrêmes (8) de cette pièce avec la tige de selle (9), et jusqu'à blocage de cette tige de selle (9) dans le tube de selle (1).

L'invention a pour objet un système de blocage de la tige de selle dans le tube de selle du cadre d'un cycle. Le blocage de la tige de selle dans le tube de selle du cadre d'un cycle est généralement réalisé par rapprochement, au moyen d'un écrou et d'une vis, de deux oreilles qui sont placées sur le tube de selle de part et d'autre d'une fente aménagée longitudinalement dans ce tube.

Ce système de blocage est simple en soi; mais il conduit à une déformation permanente du tube de selle et à une dégradation de la tige de selle, ce qui, à la longue, donne lieu à un serrage insuffisant de la tige de selle dans le tube de selle et oblige ainsi le cycliste à resserrer périodiquement le système de blocage.

Il existe certes un autre moyen de blocage qui est utilisé notamment sur les cycles comportant un cadre réalisé avec des tubes profilés. Ce système consiste en une vis pointeau qui prend appui sur un écrou porté par le tube de selle et exerce sur la tige de selle une pression suffisante pour permettre son immobilisation dans le tube de selle.

Ce système de serrage présente toutefois l'inconvénient de dégrader la tige de selle de façon encore plus accentuée que le premier système de blocage rappelé ci-dessus.

Il n'existe donc pas de système de blocage permettant d'immobiliser efficacement la tige de selle dans le tube de selle sans conduire à une dégradation de l'un ou de l'autre de ces éléments ou même de ces deux éléments.

L'invention pallie cette lacune.

Elle a pour objet, à cet effet, un système de blocage dans lequel la tige de selle est maintenue en appui dans le tube de selle par les deux ailes d'une pièce qui présente une section en U et est soumise à l'action réciproque d'un écrou et d'une vis, et dans lequel le tube de selle porte un écrou fixe situé entre deux saignées horizontales aménagées dans ce tube et traversées librement par les deux ailes de la pièce en U, et une vis coopérant avec cet écrou exerce par sa tête une poussée sur cette pièce pour maintenir par ses ailes la tige de selle en appui à l'intérieur du tube de selle.

Ce système de blocage convient à tous cycles ou cyclomoteurs, quel que soit le profil de son cadre. Il est donc applicable aux cadres constitués par des tubes de section circulaire ; mais il convient notamment aux cadres dits profilés.

Dans le cas particulier des cadres profilés, la mise en place et l'enlèvement de la tige de selle sont en effet plus difficiles que dans le cas des cadres comportant des tubes de section circulaire, car il n'est pas possible d'extraire et de faire pénétrer la tige de selle dans le tube de selle en donnant un mouvement tournant ou oscillant à la tige de selle dans le tube de selle.

Dans ce cas des cadres profilés, le système de blocage qui fait l'objet de l'invention permet précisément d'obtenir un blocage énergique de la tige de selle dans le tube de selle, tout en permettant après desserrage de la vis une extraction ou une introduction facile de la tige de selle hors du tube de selle ou dans le tube de selle. En raison de l'efficacité du serrage obtenu par la pièce en forme de U, il est en effet possible de donner à la tige de selle une section dont les dimensions sont assez nettement inférieures à celles du tube de selle ; et malgré cette différence de dimension, l'immobilisation s'effectue dans les meilleures conditions, car l'appui de la tige de selle dans le tube de selle se fait par coincement sur toute la périphérie de la zone étroite de ces deux éléments.

L'invention sera bien comprise, d'ailleurs, à l'aide de la description qui suit, en référence aux dessins schématiques annexés représentant, à titre d'exemplesnon limitatifs, une forme d'exécution de ce système de blocage de la tige de selle dans le tube de selle, dans le cas particulier d'un cadre profilé :

Fig. 1 - est une vue de côté en élévation d'une partie de la zone supérieure du tube de selle,

Fig. 2 - est, à plus grande échelle, une vue en perspective de la pièce réalisant le blocage,

Fig. 3 - est une vue en coupe verticale de la tige de selle et du tube de selle en position de blocage et

Fig. 4 - en est une vue en coupe horizontale suivant 4/4 de la figure 3.

Dans ces dessins (1) désigne le tube de selle du cadre du cycle.

A proximité de son extrêmité supérieure, ce tube (1) présente deux saignées horizontales (2) entre lesquelles est placé un écrou (3) qui est brasé sur le tube (1). Ces deux saignées (2) et cet écrou (3) sont situés dans la zone de plus grande largeur du tube (1), c'est-à-dire dans celle dirigée vers l'avant du cycle.

Il est toutefois dès lors précisé que, si le tube de selle était de section circulaire, les saignées (2) et l'écrou (3) seraient de préférence placés dans la zone arrière de ce tube.

Avec les deux saignées (2) et avec l'écrou (3) coopère une pièce de blocage qui est désignée de façon générale par (4). Cette pièce présente une forme générale de tronc de pyramide ; sa grande base est ouverte ; sa petite base est fermée et présente un orifice (6) ; et deux de ses faces latérales (5) se terminent par des bords en arc de cercle (8) dont le diamètre correspond à celui de la zone avant du tube de selle (1).

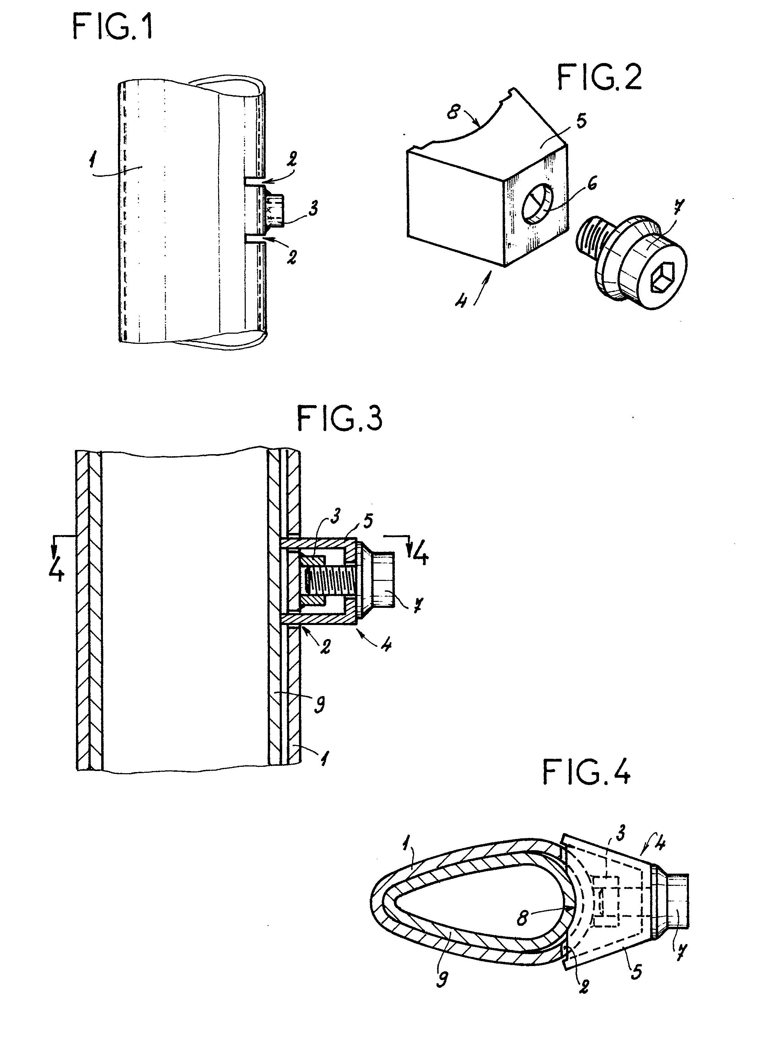

Cette pièce (4) coopère grâce à une vis (7) avec l'écrou (3) du tube de selle (1) pour réaliser le blocage de la tige de selle (9) dans le tube (1). En effet, comme le montrent les figures 3 et 4, les deux faces latérales horizontales de la pièce (4) passent, par leur base, au travers des deux saignées (2) du tube de selle (1), cependant que la tige de la vis (7) traverse l'orifice (6) de la pièce (4) et se visse dans l'écrou (3) solidaire du tube (1).

Le blocage de la tige de selle (9) dans le tube de selle (1) nécessite seulement le serrage de la vis (7). En prenant appui par sa tête contre la face frontale de la pièce (4), la vis (7) tend en effet à repousser cette pièce en direction de la tige de selle (9) jusqu'à ce que les bords en arc (8) de ladite pièce viennent en contact avec la tige de selle (9) ; Si le serrage de la vis (7) est suffisant, la tige de selle (9) est repoussée entièrement à l'intérieur du tube de selle (1), réalisant ainsi un blocage efficace des deux éléments tige (9) et tube (1) l'un par rapport à l'autre ; ce blocage efficace est réalisé sans dégradation ni de la tige de selle, ni du tube de selle, car les surfaces en contact de la tige et du tube sont grandes, et la longueur des appuis de la pièce (4) contre la tige de selle (9) est elle-même grande.

Il n'en demeure pas moins que le montage et le démontage de la tige de selle (9) sont faciles, malgré leurs profils. Dès l'instant en effet où la vis (7) est désserrée, la pièce (4) libère entièrement la tige de selle (9) à l'intérieur du tube de selle (1), et grâce aux différences de dimensions en section de ces deux organes, la tige de selle peut très facilement être déplacée dans le tube de selle.

Comme il va de soi, l'invention ne se limite pas à la seule forme d'exécution de ce système de blocage de tige de selle qui a été ci-dessus indiquée à titre d'exemple ; elle en embrasse au contraire toutes les variantes de réalisation.

5

0060750

- <u>REVENDICATIONS</u> -

1. - Blocage de tige de selle pour cycles, cyclomoteurs ou similaires, dans lequel la tige de selle (9) est maintenue en appui dans le tube de selle (1) par les deux ailes (5) d'une pièce (4) qui présente une section en U et est soumise à l'action réciproque d'un écrou et d'une vis, caractérisé en ce que le tube de selle (1) porte un écrou fixe (3) situé entre deux saignées horizontales (2) aménagées dans ce tube et traversées librement par les deux ailes (5) de la pièce en U (4), et une vis (7) coopérant avec cet écrou (3) exerce par sa tête une poussée sur cette pièce (4) pour maintenir par ses ailes (5) la tige de selle (9) en appui à l'intérieur du tube de selle (1).

2. - Blocage de tige de selle selon la revendication 1, appliqué à un cadre de cycle profilé, caractérisé en ce que l'écrou (3) et les deux saignées (2) sont aménagées dans la zone avant du tube de selle (1), c'est-à-dire dans sa zone large.

FIG.1

FIG.2

FIG.3

FIG.4

# 0060750

**Office européen des brevets**

## RAPPORT DE RECHERCHE EUROPEENNE

EP 82 40 0334

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | <u>NL - A - 68 15 798</u> (BATAVUS)<br><br>* page 3, lignes 14-34; figures 1, 2 * | 1 | B 62 J 1/08 |
| | --- | | |
| A | <u>US - A - 3 849 008</u> (BOUCHER)<br><br>* en entier * | 1 | |
| | --- | | |
| A | <u>FR - A - 836 294</u> (SCHULZ) | | |
| A | <u>US - A - 4 182 508</u> (KALLAI) | | |
| | --------- | | |

**DOMAINES TECHNIQUES RECHERCHES (Int. Cl. ³)**

B 62 J
B 62 K

Le présent rapport de recherche a été établi pour toutes les revendications

| Lieu de la recherche | Date d'achèvement de la recherche | Examinateur |
|---|---|---|
| La Haye | 21-06-1982 | GEMMELL |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82